# FASCICULE DE BREVET EUROPEEN

(11) **EP 0 991 834 B1**
(45) Date de publication et mention de la délivrance du brevet: **09.04.2003**
(21) Numéro de dépôt: 98928403.9
(22) Date de dépôt: 29.05.1998
(51) Int. Cl.: E05B 53/00

(54) **DISPOSITIF DE SERRURE DE VEHICULE AUTOMOBILE A COMMANDE PAR CABLES DE L'OUVERTURE INTERIEURE ET DE L'OUVERTURE EXTERIEURE**
KRAFTWAGENVERRIEGELUNGSVORRICHTUNG MIT KABELBETÄTIGUNG ZUM ÖFFNEN VON INNEN UND VON AUSSEN
MOTOR VEHICLE LOCKING DEVICE WITH CABLE CONTROL FOR INSIDE OPENING AND OUTSIDE OPENING

(30) Priorité: 02.06.1997 FR 9706756
(43) Date de publication de la demande: 12.04.2000
(73) Titulaire: Meritor Light Vehicle Systems-France, 45600 Sully sur Loire (FR)
(72) Inventeur: GRANDJEAN, Richard, F-88100 Sainte Marguerite (FR)
(74) Mandataire: Jones, John Bryn
(86) Numéro de dépôt international: FR9801096
(87) Numéro de publication internationale: WO98055718

(56) Documents cités:
- EP-A- 0 728 885
- US-A- 4 907 428

## Description

La présente invention a pour objet un dispositif de serrure de porte latérale de véhicule automobile, comportant un système de commande par câbles, d'un levier d'ouverture extérieure et d'un levier d'ouverture intérieure, les câbles étant reliés aux poignées respectives d'ouverture extérieure et d'ouverture intérieure du véhicule.

Complémentairement l'invention concerne également un procédé pour régler la longueur des câbles de commande du levier d'ouverture intérieure et du levier d'ouverture extérieure.

Ce type de commande de l'ouverture de la serrure par câbles présente un double avantage : d'une part il assure une meilleure sécurité contre le vol, car les câbles, enveloppés dans des gaines, sont pratiquement incrochetables; d'autre part en cas d'accident avec choc latéral, un déplacement relatif de la serrure par rapport à sa commande n'entraîne pas une ouverture intempestive de la porte pendant le choc ou des difficultés à l'ouvrir après celui-ci, contrairement à ce qui survient avec des tringles rigides de commande.

Dans ces dispositifs tels que celui décrit dans le EP-A-0.728.885, la serrure et son système de commande par câbles forment un ensemble totalement fermé, ce qui pose un problème tenant à la difficulté pour le monteur de mettre en place le système de câbles sans visibilité.

Conformément à l'invention, le dispositif comprend des moyens de guidage d'une extrémité d'un câble de commande jusqu'au levier d'ouverture extérieure, permettant un montage "en aveugle" en toute sécurité du câble sur la serrure.

Une virole étant fixée à l'extrémité du câble, l'opérateur peut grâce à ces moyens de guidage, introduire la virole au voisinage de l'extrémité du levier d'ouverture extérieure jusqu'à un emplacement où le câble peut venir s'introduire automatiquement dans une fente d'une forme terminale du levier d'ouverture extérieure, maintenu dans une position adéquate pour permettre l'accrochage du câble et de la virole.

Suivant un mode de réalisation, le dispositif est caractérisé en ce que lesdits moyens comprennent une goulotte de guidage de la virole, formée latéralement à un boîtier de la serrure et prolongée vers l'extérieur par un arrêt de gaine; la goulotte est ménagée en vis-à-vis d'une extrémité libre du levier d'ouverture extérieure de façon à délimiter avec cette extrémité libre un passage d'introduction de la virole jusqu'à une position où elle peut venir automatiquement s'accrocher à ladite extrémité libre du levier.

Suivant une autre caractéristique de l'invention, le dispositif comprend un système de commande par câble logé dans une gaine d'un levier d'ouverture intérieure, l'extrémité de câble portant une virole.

Selon l'invention, ce dispositif est caractérisé en ce qu'il comporte des moyens de guidage de l'extrémité du câble jusqu'au levier d'ouverture intérieure placé en position d'ouverture de la serrure lors du montage de cette dernière, et des moyens pour maintenir ledit levier en position d'ouverture pendant l'introduction de l'extrémité du câble jusqu'au levier.

L'invention a également pour objet un procédé pour régler la longueur des câbles de commande des leviers d'ouverture extérieure et d'ouverture intérieure, et plus particulièrement la longueur de câble délimitée entre une poignée de commande manuelle et un arrêt de gaine attenant.

Conformément à ce procédé :
a) on bloque le levier d'ouverture extérieure en position de repos (position de fermeture) ou on laisse le levier d'ouverture intérieure en position de fermeture;
b) on introduit une cale de longueur connue entre la butée de gaine située du côté de la poignée de commande et cette dernière,
c) on pousse la butée de gaine sur la cale de réglage, ce qui met le câble sous tension,
d) on fixe une seconde butée de gaine, située du côté de la serrure, sur l'arrêt de gaine associé, par exemple par soudage aux ultrasons.

Une fois cette séquence effectuée, la cote du tronçon de câble dépassant de l'arrêt de gaine, côté commande, est réglée, le câble est mis sous tension, tous les intervalles de tolérance du dispositif étant absorbés.

D'autres particularités et avantages de l'invention apparaîtront au cours de la description qui va suivre, faite en référence aux dessins annexés qui en illustrent une forme de réalisation à titre d'exemple non limitatif.
La figure 1 est une vue en élévation longitudinale d'une forme de réalisation de l'ensemble du dispositif de commande par câble d'un des leviers d'ouverture d'une serrure non représentée.
La figure 2 est une vue en perspective partielle à échelle agrandie montrant le levier d'ouverture extérieure d'une serrure et la partie associée du système de commande par câble selon une forme de réalisation de l'invention, la virole d'extrémité du câble de commande étant introduite dans les moyens de guidage.
La figure 3 est une vue analogue à la figure 2 illustrant la phase suivante de l'accrochage de la virole au levier d'ouverture extérieure et la mise en place de la butée de gaine et de la gaine contenant le câble.
La figure 4 est une vue en perspective partielle illustrant le levier d'ouverture intérieure d'une serrure non représentée et un renvoi de décondamnation associé, ces pièces étant dans la phase de mise en position du levier d'ouverture intérieure avant accrochage de la virole du câble de commande correspondant.
La figure 5 est une vue en coupe à échelle agrandie d'un détail de la figure 4.
La figure 6 est une vue en perspective analogue à la figure 4 montrant la phase consécutive de verrouillage du levier d'ouverture intérieure en position haute, par le renvoi de décondamnation.
La figure 7 est une vue analogue à la figure 6 illustrant l'étape suivante dans laquelle la virole d'extrémité du câble de commande est introduite dans la serrure pour être accrochée au levier d'ouverture intérieure.
La figure 8 est une vue analogue à la figure 7 montrant la virole et le câble de commande accrochés au levier d'ouverture intérieure, toujours maintenu en position haute verrouillée par le renvoi de décondamnation.
La figure 9 est une vue en perspective analogue à la figure 8 montrant le début du déverrouillage du levier d'ouverture intérieure, auquel le câble de commande a été accroché.
La figure 10 est une vue en perspective analogue à la figure 9 montrant le levier d'ouverture intérieure rappelé élastiquement en position basse, permettant la fermeture de la serrure.
La figure 11 est une vue en perspective analogue à la figure 10 montrant le levier d'ouverture intérieure en position haute pour l'ouverture de la porte et le renvoi de condamnation dans une position ou tout nouveau verrouillage avec le levier d'ouverture intérieure est empêché.

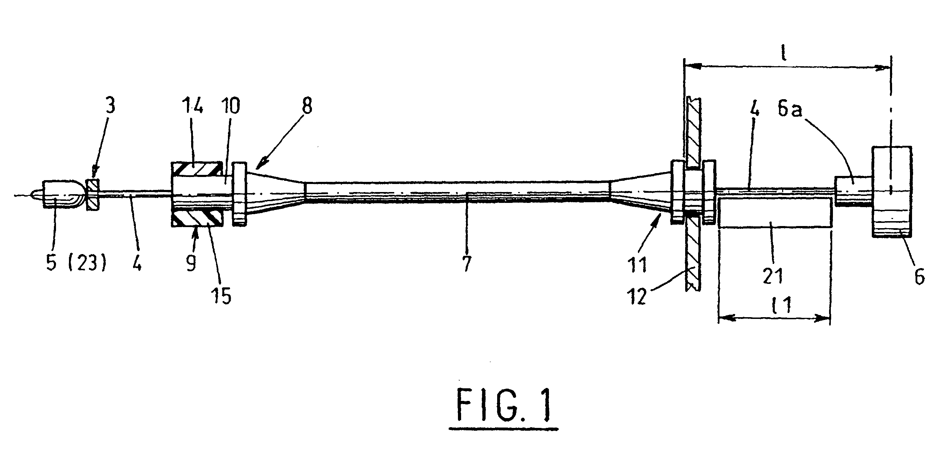

Le dispositif de serrure de véhicule automobile illustré aux figures 1 à 3 comprend une serrure 1 dont seuls un boîtier 2 et un levier d'ouverture extérieure 3 sont représentés, ainsi qu'un système de commande du levier 3 par un câble 4 logé dans une gaine 7.

Du côté de la serrure 1, l'extrémité du câble 4 porte une virole 5 tandis que son extrémité opposée, côté commande, est munie d'un embout 6 en T de commande manuelle du levier d'ouverture extérieure 3. L'embout 6 est fixé à une poignée de commande manuelle par des moyens connus en soi et non représentés.

Du côté de la serrure 1, la gaine 7 se termine par une butée de gaine 8 venant en contact avec un arrêt de gaine 9. A son extrémité opposée, côté commande, la gaine 7 se termine par une seconde butée de gaine 11 coopérant avec un arrêt de gaine 12, dont dépasse le câble 4 sur une certaine longueur l constituant une cote entre le centre de l'embout de commande 6 et le plan de référence de l'arrêt de gaine 12.

Les moyens de guidage de l'extrémité du câble 4 et de la virole 5 jusqu'au levier 3 comprennent une demi-goulotte 13 formée latéralement au boîtier 2 et prolongée vers l'extérieur par l'arrêt de gaine 9, lequel est constitué d'un demi-arrêt de gaine 14 et d'un demi-arrêt de gaine complémentaire 15. Une demi-goulotte 23, attenante à un capot 20, complète la demi-goulotte 13. Dans les demi-arrêts de gaine 14, 15 sont ménagés des logements 14a, 15a de réception d'une partie cylindrique 10 de la butée de gaine 8.

Le levier d'ouverture extérieure 3 est articulé rotativement autour d'un pivot d'axe XX sur le boîtier 2, et est rappelé dans sa position de repos 3a par un ressort non représenté. L'extrémité libre du levier 3 est disposée en regard de la goulotte (13, 23) et pourvue d'une forme profilée concave 17 dans laquelle est agencée une fente 18 de sorte que la forme 17 constitue une fourche terminale orientée vers la goulotte (13, 23) en délimitant avec celle-ci un passage 19 pour la virole 5. Le passage 19 est délimité par un fond 30 s'étendant sous la forme 17, par la paroi latérale de la goulotte (13, 23) et par le couvercle 20.

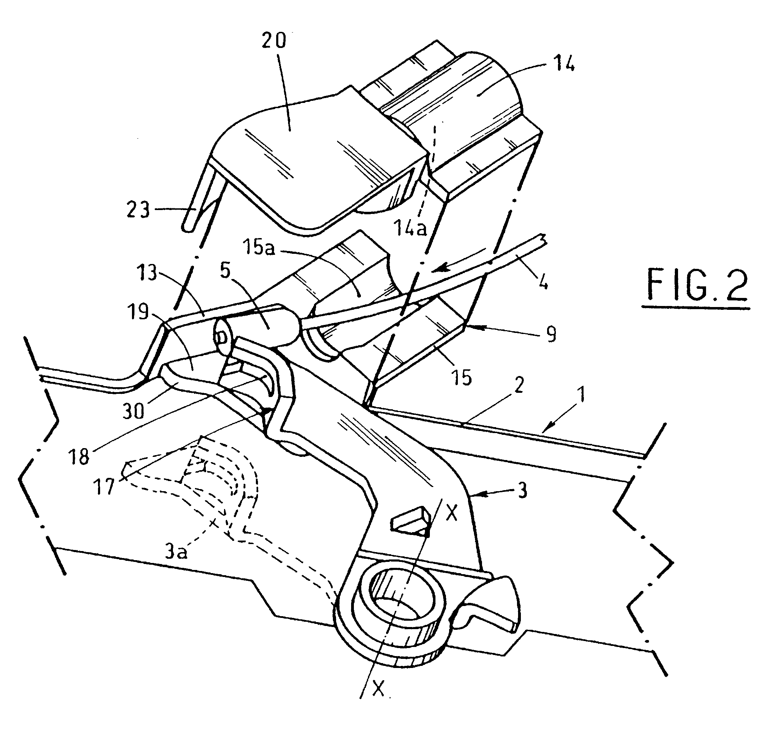

La virole 5 et l'extrémité du câble 4 peuvent être introduits de l'extérieur dans le logement 14a, 15a formé par l'assemblage des demi-arrêts de gaine 14, 15, jusqu'à ce que la virole 5 atteigne le passage délimité par l'extrémité de la fourche 17 et la goulotte (13, 23) en étant guidée par la paroi de celle-ci, son fond 30 et son couvercle 20 (figure 2).

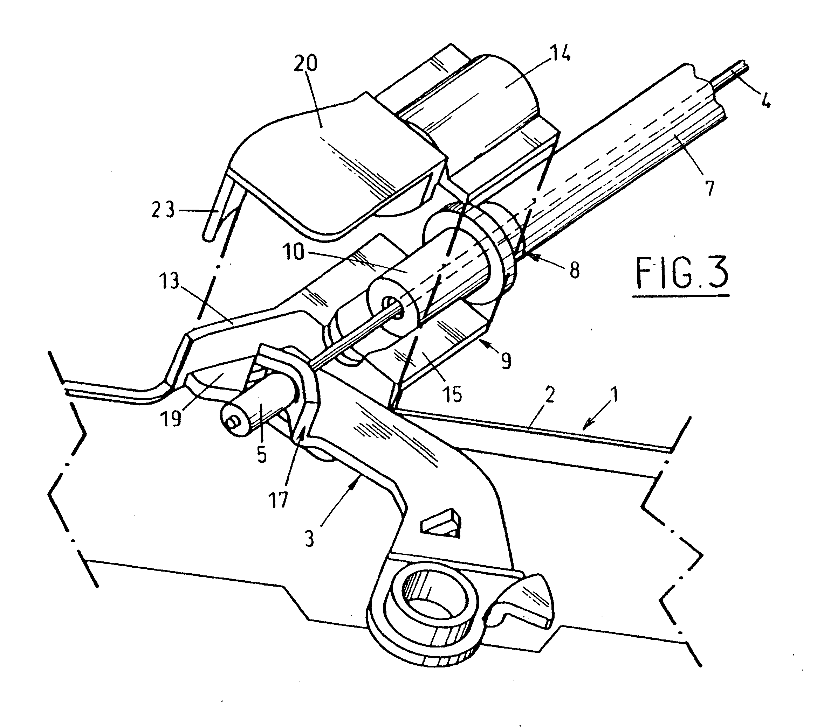

Le montage par un opérateur du câble de commande 4 et de sa virole 5 sur le levier d'ouverture extérieure 3 s'effectue "en aveugle" de la manière suivante.
a) le levier 3 étant dans sa position de repos 3a où il est rappelé élastiquement par son ressort, l'opérateur pousse le levier 3 en le faisant basculer, contre la force de rappel de son ressort, jusqu'à ce qu'il vienne dans la position représentée en trait continu à la figure 2, et maintient le levier 3 dans cette position grâce à un outil non représenté.
b) L'opérateur prend le câble 4 et introduit sa virole 5 dans le logement 14a, 15a, les deux moitiés 14, 15 de l'arrêt de gaine 9 n'étant pas à ce stade fixées l'une à l'autre. La poussée sur le câble 4 fait pénétrer la virole 5 dans le passage 19 entre la goulotte de guidage 13 et la fourche 17 du levier 3, ce déplacement étant guidé par le profil en entonnoir de la goulotte (13, 23), du fond 30 et du couvercle 20.
c) La virole 5 dépasse la fourche 17, puis en raison de la rigidité naturelle du câble, se rabat automatiquement derrière celle-ci (figure 3) en même temps que le câble 4 pénètre dans la fente 18. L'extrémité 5 du câble 4 est alors accrochée au levier d'ouverture extérieure 3.
d) L'opérateur relâche l'outil de maintien du levier 3 en position fin de course, de sorte que le ressort du levier 3 rappelle celui-ci dans sa position de repos 3a, et que le câble 4 se tend.
e) On effectue alors une opération de réglage de la longueur I du câble 4 dépassant l'arrêt de gaine 12 jusqu'à l'embout de commande 6, en mettant en oeuvre un procédé également visé par l'invention.

Ce réglage est exécuté de la manière suivante.
- on bloque le levier d'ouverture extérieure 3 dans sa position de repos 3a (figure 2).
- On introduit une cale 21 de cote connue I1, fixée par le cahier des charges, entre la butée de gaine 11 située du côté de l'embout de commande 6, et l'extrémité 6a de ce dernier (figure 1).
- On pousse la butée de gaine 11 manuellement sur la cale de réglage 21, ce qui met le câble 4 sous tension.
- On fixe la seconde butée de gaine 8, située du côté de la serrure 1, sur l'arrêt de gaine 9, par exemple par soudage aux ultrasons du boîtier 14 et du couvercle 15 sur la partie cylindrique 10 de la butée de gaine 8.

A ce stade la longueur I de l'extrémité dépassante du câble 4 est convenablement réglée, tous les intervalles de tolérance du dispositif étant absorbés.

Ainsi toute course à vide entre la virole 5 et le levier d'ouverture extérieure 3 est évitée.

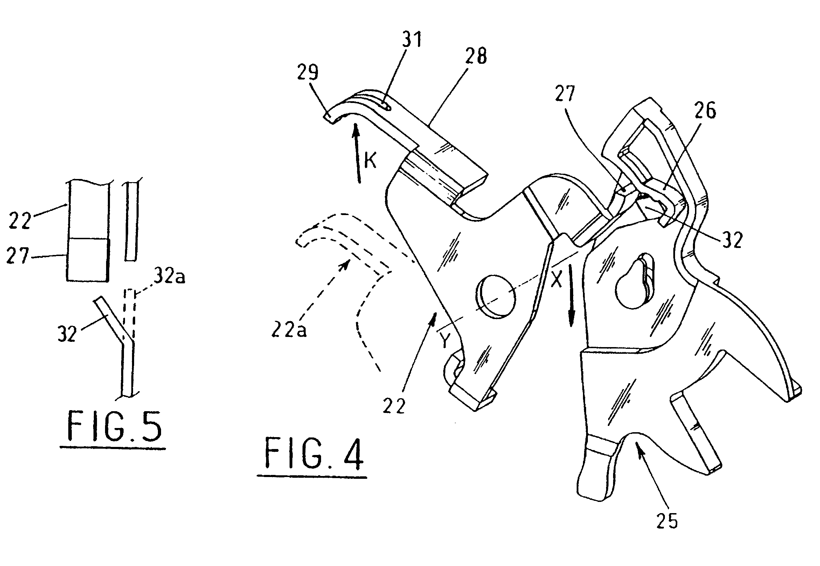

On décrira maintenant en référence aux figures 4-11 le système de commande par câble du levier d'ouverture intérieure 22 de la serrure 1.

Le levier d'ouverture intérieure 22 est articulé autour d'un axe YY et rappelé dans une position basse de repos 22a par un ressort de rappel non représenté, de manière connue en soi. Cette position basse 22a est celle dans laquelle la porte est verrouillée, tandis que sa position haute (en trait continu à la figure 4), permet le déverrouillage de la serrure et l'ouverture de la porte du véhicule.

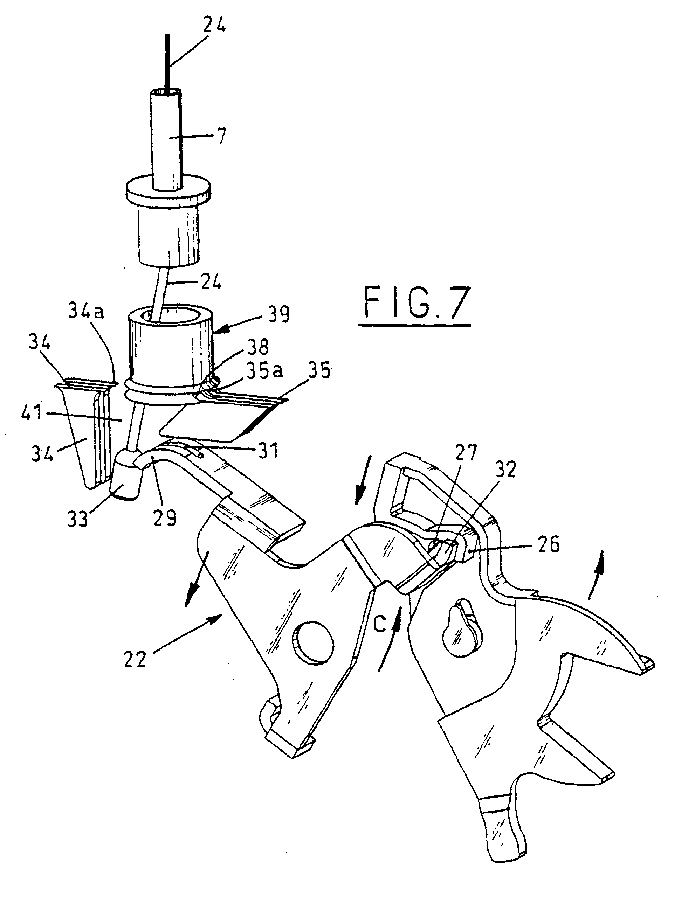

L'invention prévoit des moyens pour maintenir le levier 22 en position haute d'ouverture pendant l'introduction de l'extrémité du câble correspondant 24 (figure 7) jusqu'au levier 22.

Dans la réalisation décrite, ces moyens de maintien du levier 22 en position d'ouverture comprennent un renvoi 25 de condamnation pourvu d'une forme 26 convenablement profilée, agencée pour coopérer après rotation vers le levier 22, avec une languette 27 du levier 22 afin de réaliser un verrouillage de ce dernier en position relevée d'ouverture de la serrure.

La languette 27 est formée à une extrémité du levier 22 opposée à sa branche 28 portant une fourche terminale incurvée 29 à fente longitudinale 31, destinée à recevoir l'extrémité du câble 24. Le levier 22 et le renvoi de condamnation 25 sont positionnés l'un par rapport à l'autre de manière que lorsque le levier 22 effectue une rotation dans le sens des aiguilles d'une montre, sa languette terminale 27 vient se placer à l'intérieur de la forme concave 26 en se verrouillant dans celle-ci. Ce verrouillage empêche par conséquent le retour en arrière dans le sens anti-horaire du levier 22, lequel est alors maintenu en position haute, d'ouverture de la serrure. Le renvoi 25 est muni d'une patte flexible 32 positionnée à l'intérieur de la forme profilée 26 de manière à faire saillie transversalement à l'état libre, en regard de la languette 27 (figure 5).

L'introduction de la languette 27 en position de verrouillage du levier 22 dans la forme concave 26 n'est possible que si au préalable la patte flexible 32, a été effacée du trajet de la languette 27, en la rabattant manuellement dans la direction transversale jusqu'à une position 32a où elle se situe sensiblement dans le plan du renvoi 25 et libère le passage pour la languette 27.

En effet une fois cette patte 32 rabattue en position escamotée 32a, la languette 27 peut venir se placer complètement à l'intérieur de la forme concave 26, la patte 32 venant alors se repositionner par détente élastique derrière la languette 22. Toutefois dans cette seconde position, elle ne peut plus faire obstacle au basculement du levier 22 de sa position haute d'ouverture jusqu'à sa position basse 22a, car la languette 27 peut revenir en arrière par glissement sur la patte 32.

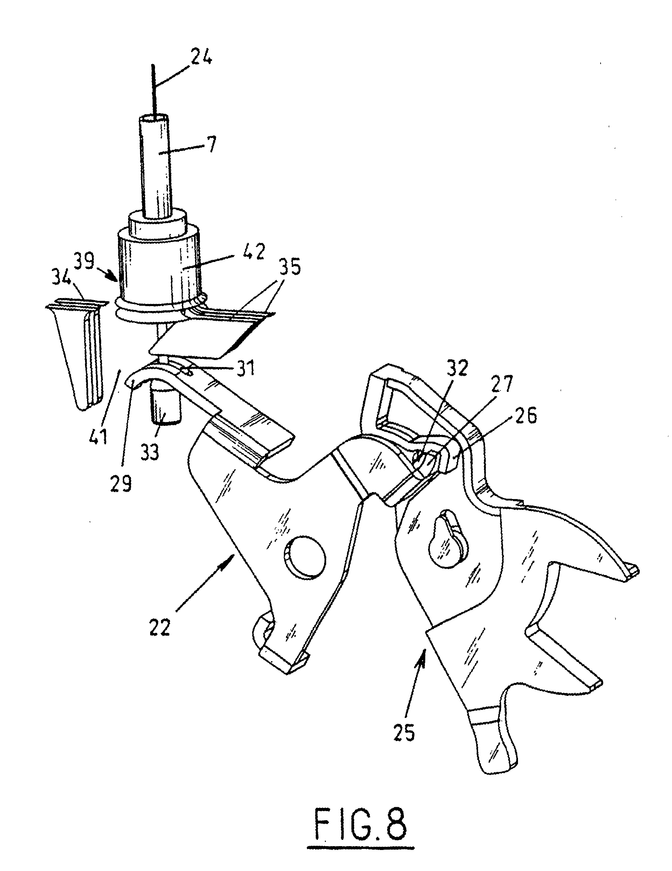

La fourche terminale 29 du levier 22 est positionnée à l'intérieur d'une goulotte de guidage de la virole 33 fixée à l'extrémité du câble de commande 24. Cette goulotte de guidage est délimitée par un ensemble de nervures 34, 35 réalisées dans la paroi du couvercle 2 de la serrure 1. Cet ensemble est formé d'un premier groupe de nervures parallèles 34 et d'un second groupe de nervures parallèles 35 séparées par des écartements respectifs 38, placés en vis-à-vis l'un de l'autre à un intervalle délimitant la goulotte 41 d'introduction et de guidage de la virole 33 jusqu'à une position (figure 7) où, étant situé juste au-dessous de la fourche 29 du levier 22, le câble 24 peut s'introduire dans la fente 31 et la virole 33 s'accrocher dans la concavité de la fourche 29 (figure 8).

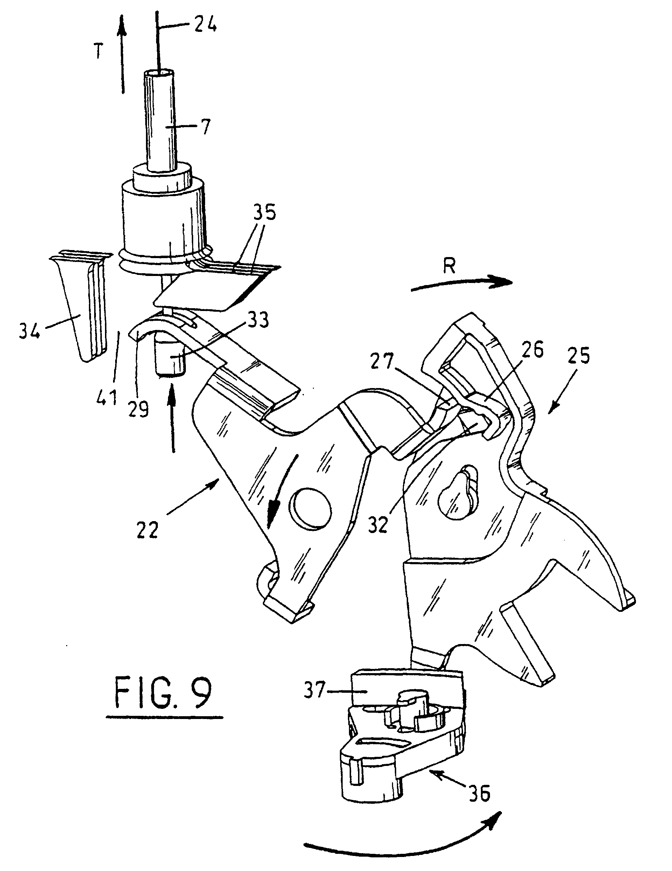

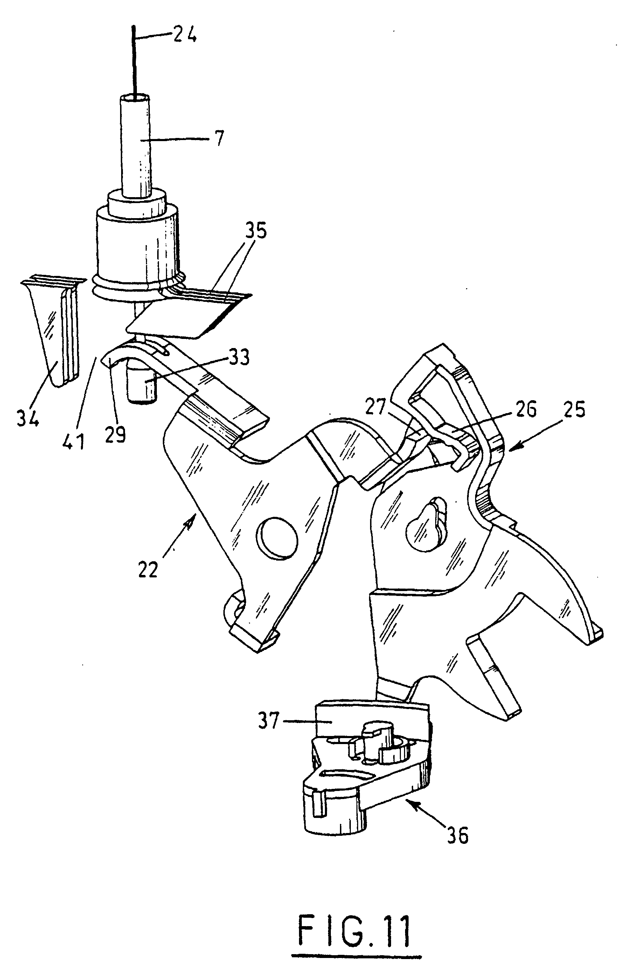

Le renvoi de condamnation 25 peut être commandé en rotation par un levier secteur 36 (figures 9, 11) portant un secteur denté 37 pouvant coopérer, de manière connue en soi avec le renvoi 25, et entraîné par un moteur de condamnation centralisée non représenté.

Les nervures 34, 35 sont raccordées au couvercle 20 par les faces 34a, 35a, d'accrochage dans des écartements correspondants 38 des nervures (34, 35) à proximité d'un arrêt de gaine 39 de part et d'autre de l'entrée de la goulotte de guidage 41. Le câble 24 est équipé d'une butée de gaine 42 pouvant venir s'introduire dans l'arrêt de gaine 39.

Le montage du câble de commande 24 sur le levier d'ouverture intérieure 22 s'effectue de la manière suivante.

L'opérateur pousse, soit manuellement soit avec un outil, la patte flexible 32 jusque dans sa position rabattue 32a afin de libérer le passage pour la languette 27 du levier d'ouverture intérieure 22.

Le levier 22 étant au départ en position de repos 22a, correspondant à la serrure verrouillée, dans laquelle il est maintenu par son ressort de rappel, l'opérateur fait basculer le levier 22 vers le haut (flèche K sur la figure 4) afin de le placer en position haute d'ouverture de la serrure, prêt à recevoir la virole 33 et le câble 24.

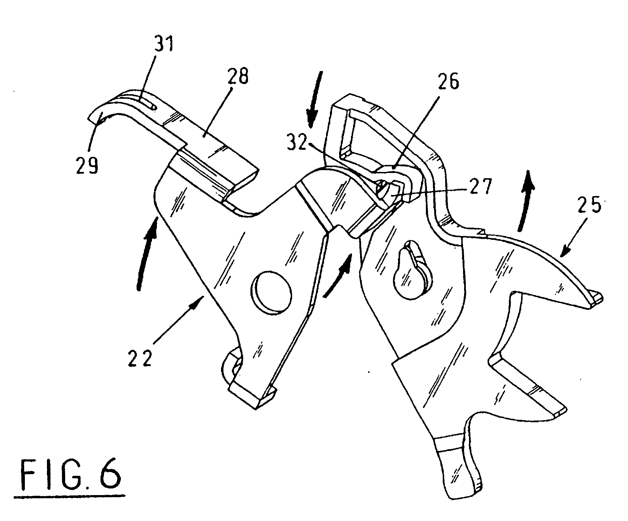

A l'issue de cette manoeuvre, le levier 22 se trouve dans la position de la figure 6, dans laquelle la languette 27 est introduite à l'intérieur du profil concave 26 du renvoi de condamnation 25, et la patte 32 rabattue derrière la languette 27. Ainsi le levier 22 est verrouillé dans sa position haute d'ouverture. La languette 27 est maintenue dans cette position verrouillée dans la forme concave 26 par le couple de rappel exercé sur le levier 22 par son ressort de rappel (flèche C sur la figure 7).

Dans la phase suivante (figure 7), le couvercle 20 de la serrure 1 étant préalablement monté, l'opérateur introduit la virole 33 dans l'arrêt de gaine 39. La virole 33, guidée par les nervures 34, 35 et leurs écartements 38, descend dans la goulotte 41 jusqu'à une position située juste au-dessous de la fourche 29 du levier 22. Puis en raison de la rigidité naturelle du câble 24, la virole 33 vient se placer au-dessous de la fourche 29 (figure 8), dans la concavité de cette dernière, de telle sorte que l'extrémité du câble 24 vient automatiquement dans la fente 31, la butée de gaine 42 venant se placer sur l'arrêt de gaine 39.

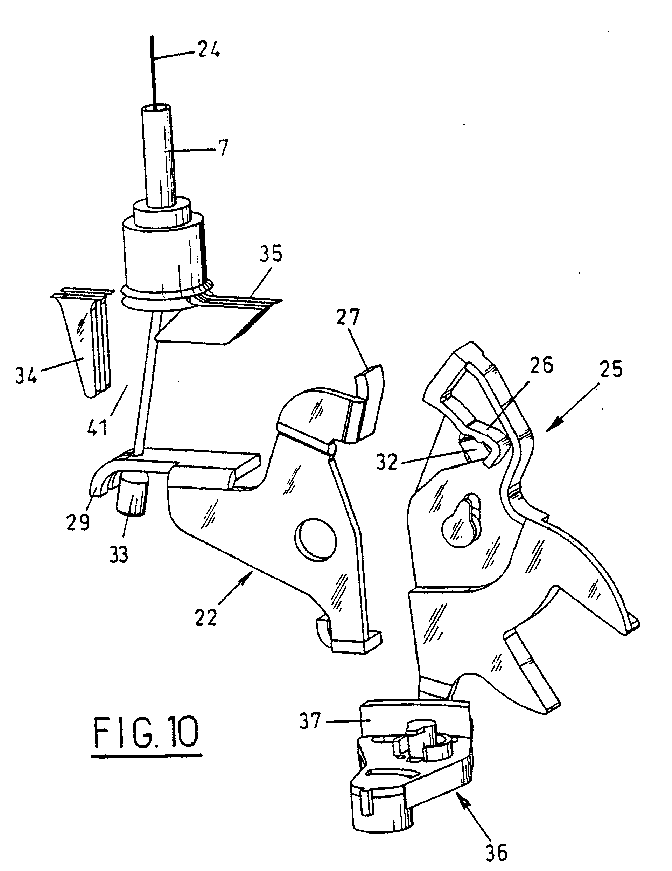

Dans l'étape suivante (figure 9), l'opérateur tire manuellement sur le câble 24 (flèche T) de manière que la virole 33 exerce sur le levier 22 un couple de basculement vers le haut, qui soulage le mécanisme auto-verrouillant (26, 27, 32). En même temps l'opérateur agit manuellement sur le levier secteur 36 pour faire basculer le renvoi de condamnation 25 dans le sens horaire (flèche R), et libérer la languette 27 du renvoi 25. Pour ce faire, l'opérateur peut également actionner le moteur de condamnation centralisée, qui entraîne le levier secteur 36 et fait basculer le renvoi 25 dans le sens horaire R. A l'issue de cette opération, le levier 22 est entièrement déverrouillé du renvoi de condamnation 25, et son ressort de rappel le replace en position basse de fermeture (figure 10). Ce basculement du levier 22 vers sa position basse de repos entraîne la virole 33 et tend le câble de commande 24, qui viennent dans la position de la figure 10.

Pour terminer le montage, il ne reste plus qu'à procéder à l'opération de réglage de la longueur de l'extrémité du câble de commande 24 dépassant de l'arrêt de gaine situé du côté de son embout de commande. Cette partie du dispositif relative au levier d'ouverture intérieure 22 est tout à fait similaire à celle illustrée à la figure 1 et les opérations d'ajustement de la longueur dépassant I sont les mêmes, de sorte que le dispositif de commande correspondant n'a pas été représenté.

L'accrochage de la virole 33 sur le levier 22 peut être exécuté de l'extérieur de la serrure, "en aveugle" en toute sécurité et avec facilité, comme dans la réalisation des figures 1 à 3.

La patte flexible 32 et la languette associée 27 présentent l'avantage supplémentaire suivant : en cas d'ordre de condamnation centralisée (par télécommande, actionneur de condamnation centralisée), lorsque le levier d'ouverture intérieure 22 est manoeuvré, la languette 27 fait obstacle au basculement du renvoi de condamnation 25 en formant butée d'arrêt pour la patte 32. La languette 27 empêche donc le renvoi 25 de venir se placer jusque dans la zone de verrouillage du levier d'ouverture intérieure 22 pour le montage de la virole de câble 33. S'il n'en était pas ainsi, le levier d'ouverture intérieure 22 pourrait rester bloqué en position haute d'ouverture par le renvoi 25 après un ordre de condamnation centralisée, et la porte ne pourrait plus alors être fermée.

L'agencement de la languette 27 et de la patte flexible 32 constitue donc une sécurité évitant un tel risque.

L'invention n'est pas limitée au mode de réalisation décrit et peut comporter des variantes d'exécution. Ainsi par exemple les arrêts de gaine 9, 39 et les goulottes de guidage 13, 23, 41 peuvent être réalisées de manière différentes de celles représentées. L'assemblage des demi-arrêts de gaine (14, 15) peut également être effectué par tout moyen adéquat autre que le soudage aux ultra-sons. En outre la serrure peut n'être équipée que d'un dispositif de commande par câble d'un levier d'ouverture extérieure ou d'un levier d'ouverture intérieure.
⁶ Thi could just mean "inside".

## Revendications

1. Dispositif de serrure de véhicule automobile, comportant un système de commande par câble (4; 24) d'un levier d'ouverture extérieure (3), ce câble étant logé dans une gaine (7) et ayant une extrémité qui porte une virole (5), **caractérisé en ce qu'**il comporte des moyens de guidage d'une extrémité du câble de commande jusqu'au levier d'ouverture extérieure (3), permettant un montage "en aveugle" du câble sur la serrure (1).

2. Dispositif selon la revendication 1, **caractérisé en ce que** lesdits moyens comprennent une goulotte (13, 23) de guidage de la virole, formée latéralement à un boîtier (2) et un couvercle (20) de la serrure (1) et prolongée vers l'extérieur par un arrêt de gaine (9), la goulotte étant ménagée en vis-à-vis d'une extrémité libre (17) du levier d'ouverture extérieure (3) de façon à délimiter avec cette extrémité libre (17) un passage (19) d'introduction de la virole jusqu'à une position où elle peut venir automatiquement s'accrocher à ladite extrémité libre du levier.

3. Dispositif selon la revendication 2, **caractérisé en ce que** l'extrémité libre du levier (3) présente une fourche incurvée (17) dans laquelle peut être introduit le câble (4) après guidage par la goulotte (13, 23), la virole (5) prenant alors appui dans la concavité de cette fourche (17).

4. Dispositif selon la revendication 2 ou 3, **caractérisé en ce que** l'arrêt de gaine (9) est constitué de deux demi-arrêts de gaine (14, 15) complémentaires, enveloppant une butée de gaine (8) traversée axialement par le câble, ces demi-arrêts de gaine étant assemblés l'un à l'autre, par exemple par soudage aux ultrasons.

5. Dispositif selon l'une des revendications 1 à 4, **caractérisé en ce que** le système de commande comprend un second arrêt de gaine (12) disposé à l'extrémité de la gaine (7) opposée à celle attenante aux moyens de guidage (13), **en ce que** le câble(4) se prolonge au-delà de ce second arrêt de gaine sur une longueur déterminée (I) et est équipé d'une poignée de commande manuelle (6), et **en ce qu'**il est prévu une cale (21) de réglage de ladite longueur du câble dépassant du second arrêt de gaine (12), cette cale étant interposée entre la butée de gaine (11) et un embout (6) de commande du câble.

6. Dispositif de serrure de véhicule automobile, comprenant un système de commande par câble (24) logé dans une gaine (7) d'un levier d'ouverture intérieure ayant une extrémité qui porte une virole (5), **caractérisé en ce qu'**il comporte des moyens de guidage (34, 35) d'une extrémité du câble jusqu'au levier d'ouverture intérieure placé en position d'ouverture de la serrure lors du montage de cette dernière, et des moyens (25, 26, 27, 32) pour maintenir ledit levier en position d'ouverture pendant l'introduction de l'extrémité du câble jusqu'au levier.

7. Dispositif selon la revendication 6, **caractérisé en ce que** lesdits moyens de maintien du levier (22) en position d'ouverture comprennent un renvoi de condamnation (25) pourvu d'une forme profilée (26), agencée pour coopérer, après rotation du renvoi vers le levier, avec une languette (27) du levier d'ouverture intérieure afin de réaliser un verrouillage de ce levier en position d'ouverture de la serrure.

8. Dispositif selon la revendication 7, **caractérisé en ce que** le renvoi de condamnation (25) est muni d'une patte flexible (32) saillant transversalement à l'intérieur de la forme profilée (26) et en regard de la languette (27) du levier (22), cette patte devant être rabattue manuellement (32a) pour autoriser l'introduction de la languette du levier jusqu'à une position verrouillée dans la forme profilée (26) du renvoi (25), puis reprenant sa position initiale autorisant un déverrouillage de la languette et un retour du levier à sa position de fermeture de la serrure par glissement de la languette sur ladite patte.

9. Dispositif selon la revendication 8, **caractérisé en ce que** l'extrémité du levier d'ouverture intérieure (22) est constituée par une fourche recourbée (29), disposée en regard d'une goulotte (41) de guidage d'une virole (33) fixée à l'extrémité du câble de commande (24), et délimitée par un ensemble de nervures (34, 35) réalisées dans la paroi du boîtier de la serrure (1).

10. Dispositif selon la revendication 9, **caractérisé en ce que** les nervures (34, 35) sont séparées par des écartements (38) assurant le guidage latéral de la virole (33).

11. Procédé pour régler la longueur des câbles (4, 24) de commande du levier d'ouverture extérieure (3) et du levier d'ouverture intérieure (22), et plus particulièrement la longueur (I) de câble délimitée entre un embout de commande manuelle (6) et un arrêt de gaine (11) attenant, dans un dispositif de serrure selon l'une quelconque des revendications 1 à 10, **caractérisé en ce que**:
a) on bloque le levier d'ouverture (3) en position de repos (position de fermeture 3a) ou on laisse le levier d'ouverture intérieure (22) en position de fermeture ;
b) on introduit une cale (21) de longueur connue (11) entre la butée de gaine (11) située du côté de l'embout de commande (6) et ce dernier,
c) on pousse la butée de gaine (11) sur la cale de réglage (21), ce qui met le câble (4, 24) sous tension,
d) on fixe une seconde butée de gaine (8, 42), située du côté de la serrure, sur l'arrêt de gaine associé (9, 39), par exemple par soudage aux ultrasons.

## Claims

1. Automotive vehicle locking device, comprising a system for operating an external opening lever (3) by cable (4; 24), said cable being accommodated in a sheath (7) and having an end which carries a ferrule (5), **characterised in that** the device has means for guiding one end of the operating cable as far as the external opening lever (3), making it possible to fit the cable "blind" onto the lock (1).

2. Device according to claim 1, **characterised in that** said means comprise a ferrule-guiding spout (13, 23) formed on the side of a housing (2) and a cover (20) for the lock (1) and extended outwards by a sheath abutment (9), the spout being arranged opposite a free end (17) of the external opening lever (3) so as to delimit with said free end (17) a passage (19) for introducing the ferrule as far as a position in which it is able to hook itself automatically to said free end of the lever.

3. Device according to claim 2, **characterised in that** the free end of the lever (3) is in the form of a curved fork (17) into which the cable (4) can be introduced after being guided by the spout (13, 23), the ferrule (5) then resting in the concave area of said fork (17).

4. Device according to claim 2 or 3, **characterised in that** the sheath abutment (9) is constituted by two complementary sheath half-abutments (14, 15) which cover a sheath limit stop (8) through which the cable passes axially, these sheath half-abutments being assembled to one another, for example by ultrasonic sealing.

5. Device according to any one of claims 1 to 4, **characterised in that** the operating system comprises a second sheath abutment (12) disposed at the end of the sheath (7) opposing the end coupled to the guiding means (13), that the cable (4) is continued beyond this second sheath abutment for a given length (1) and is fitted with a manual operating handle (6), and that a shim (21) is provided for regulating said length of the cable projecting from the second sheath abutment (12), said shim being interposed between the sheath limit stop (11) and a cable control end piece (6).

6. Automotive vehicle locking device, comprising a system for operating by cable (24), accommodated in a sheath (7), an internal opening lever, having an end which carries a ferrule (5), **characterised in that** it comprises means (34, 35) for guiding one end of the cable as far as the internal opening lever placed in the lock opening position at the time that the lock is fitted, and means (25, 26, 27, 32) for holding said lever in the opening position whilst the end of the cable is introduced as far as the lever.

7. Device according to claim 6, **characterised in that** said means (22) for holding the lever in the opening position comprise a security latching element (25) incorporating a profiled configuration (26), arranged so as to cooperate with a tongue (27) of the internal opening lever, after the element has been rotated towards the lever, in order to cause said lever to become interlocked in the lock opening position.

8. Device according to claim 7, **characterised in that** the security latching element (25) is provided with a flexible lug (32) which protrudes transversely to the interior of⁶ the profiled configuration (26) and facing the tongue (27) of the lever (22), it being necessary to depress (32a) this lug by hand so as to enable the tongue of the lever to be introduced as far as an interlocked position in the profiled configuration (26) of the element (25), then resuming its starting position which enables the tongue to be released and the lever to return to its lock closing position by means of the tongue sliding over said lug.

9. Device according to claim 8, **characterised in that** the end of the internal opening lever (22) is constituted by a bent fork (29), disposed facing a spout (41) for guiding a ferrule (33) fixed on the end of the operating cable (24), and delimited by an assembly of ribs (34, 35) incorporated in the wall of the housing of the lock (1).

10. Device according to claim 9, **characterised in that** the ribs (34, 35) are separated by gaps (38) which guide the ferrule (33) laterally.

11. Method for regulating the length of the cables (4, 24) operating the external opening lever (3) and the internal opening lever (22), and more particularly the length (l) of cable delimited between a manual control end piece (6) and a coupled sheath abutment (11), in a locking device as claimed in any of claims 1 to 10, **characterised in that**:
a) the opening lever (3) is locked in the rest position (closure position 3a) or the internal opening lever (22) is left in the closure position;
b) a shim (21) of known length (11) is introduced between the sheath limit stop (11) situated on the control end piece (6) side and the latter;
c) the sheath limit stop (11) is pushed onto the regulating shim (21), which places the cable (4, 24) under tension;
d) a second sheath limit stop (8, 42), situated on the lock side, is fixed onto the associated sheath abutment (9, 39), for example by ultrasonic sealing.

## Patentansprüche

1. Schließvorrichtung für Kraftfahrzeuge, mit einer Kabelbetätigung (4; 24) für einen Hebel (3) zum Öffnen von außen, wobei dieses Kabel in einem Mantel (7) untergebracht ist und an einem Ende eine Hülse (5) trägt, **dadurch gekennzeichnet, dass** sie Mittel zum Führen eines Endes des Betätigungskabels zum Hebel (3) zum Öffnen von außen enthält, die eine "blinde" Anordnung des Kabels am Schloss (1) ermöglichen.

2. Vorrichtung nach Anspruch 1, **dadurch gekennzeichnet, dass** die genannten Mittel eine Rinne (13, 23) zum Führen der Hülse enthalten, die seitlich an einem Gehäuse (2) und einem Deckel (20) des Schlosses (1) gebildet und nach außen durch eine Mantelarretierung (9) verlängert ist, wobei die Rinne einem freien Ende (17) des Hebels (3) zum Öffnen von außen gegenüberliegend so ausgeführt ist, dass sie mit diesem freien Ende (17) einen Durchgang (19) zum Einführen der Hülse in eine Stellung eingrenzt, in der sie sich selbsttätig am genannten freien Ende des Hebels einhängen kann.

3. Vorrichtung nach Anspruch 2, **dadurch gekennzeichnet, dass** das freie Ende des Hebels (3) eine gekrümmte Gabel (17) aufweist, in die das Kabel (4) nach Führung durch die Rinne (13, 23) eingeführt werden kann, wobei die Hülse (5) sich dann in die Aushöhlung dieser Gabel (17) einlegt.

4. Vorrichtung nach Anspruch 2 oder 3, **dadurch gekennzeichnet, dass** die Mantelarretierung (9) aus zwei komplementären Mantelarretierhälften (14, 15) besteht, die einen Mantelanschlag (8) umschließen, der axial vom Kabel durchquert wird, wobei diese Mantelarretierhälften beispielsweise durch Ultraschallschweißen aneinandergefügt sind.

5. Vorrichtung nach einem der Ansprüche 1 bis 4, **dadurch gekennzeichnet, dass** die Betätigungseinrichtung eine zweite Mantelarretierung (12) enthält, die am Ende des Mantels (7) angeordnet ist, das dem an die Führungsmittel (13) angrenzenden Ende gegenüberliegt, dass das Kabel (4) über diese zweite Mantelarretierung über eine bestimmte Länge (1) hinausragt und mit einem Griff (6) zur manuellen Betätigung versehen ist und dass ein Keil (21) zum Einstellen der genannten Kabellänge vorgesehen ist, die aus der zweiten Mantelarretierung (12) vorsteht, wobei dieser Keil zwischen dem Mantelanschlag (11) und einem Endstück (6) zum Betätigen des Kabels angeordnet ist.

6. Schließvorrichtung für Kraftfahrzeuge, mit einem System zur Betätigung per Kabel (24), das in einem Mantel (7) eines Hebels zum Öffnen von innen untergebracht ist, von dem ein Ende eine Hülse (5) trägt, **dadurch gekennzeichnet, dass** sie Mittel (34, 35) zum Führen eines Endabschnitts des Kabels bis zum Hebel zum Öffnen von innen enthält, der bei Montage des Schlosses in dessen Offenstellung gebracht ist, sowie Mittel (25, 26, 27, 32), um den genannten Hebel während des Einführens des Kabelendes bis zum Hebel in der Offenstellung zu halten.

7. Vorrichtung nach Anspruch 6, **dadurch gekennzeichnet, dass** die genannten Mittel zum Halten des Hebels (22) in der Offenstellung ein Sperrvorgelege (25) aufweisen, das mit einer profilierten Form (26) versehen ist, die dazu vorgesehen ist, nach einer Drehung des Vorgeleges zum Hebel hin mit einer Zunge (27) des Hebels zum Öffnen von innen zusammenzuwirken, um eine Verriegelung dieses Hebels in der Offenstellung des Schlosses zu bewirken.

8. Vorrichtung nach Anspruch 7, **dadurch gekennzeichnet, dass** das Sperrvorgelege (25) mit einer flexiblen Lasche (32) versehen ist, die quer im Inneren der profilierten Form (26) und der Zunge (27) des Hebels (22) gegenüberliegend vorsteht, wobei diese Lasche manuell umgeklappt werden muss (32a), um das Einführen der Zunge des Hebels in eine Verriegelungsstellung in der profilierten Form (26) des Vorgeleges (25) zu gestatten, und die dann wieder ihre Ausgangsstellung einnimmt, um eine Entriegelung der Lasche und ein Rückführen des Hebels in seine Schlossschließstellung durch Gleiten der Zunge an dieser Lasche zu gestatten.

9. Vorrichtung nach Anspruch 8, **dadurch gekennzeichnet, dass** das Ende des Hebels (22) zum Öffnen von innen aus einer gekrümmten Gabel (29) besteht, die der Rinne (41) zum Führen einer am Ende des Betätigungskabels (24) befestigten Hülse gegenüberliegend angeordnet ist und von einer Gruppe von Rippen (34, 35) eingegrenzt ist, die in der Gehäusewand des Schlosses (1) ausgeführt sind.

10. Vorrichtung nach Anspruch 9, **dadurch gekennzeichnet, dass** die Rippen (34, 35) durch Zwischenräume (38) getrennt sind, die das seitliche Führen der Hülse (33) gewährleisten.

11. Verfahren zum Einstellen der Länge der Kabel (4, 24) zum Betätigen des Hebels (3) zum Öffnen von außen und des Hebels (22) zum Öffnen von innen, und insbesondere der Kabellänge (l), die zwischen einem Endstück (6) zur manuellen Betätigung und einer angrenzenden Mantelarretierung (11) eingegrenzt ist, und zwar in einer Schlossvorrichtung nach einem der Ansprüche 1 bis 10, **dadurch gekennzeichnet, dass**
a) der Öffnungshebel (3) in Ruhestellung (Schließstellung 3a) gesichert oder der Hebel (22) zum Öffnen von innen in Schließstellung belassen wird,
b) ein Keil (21) bekannter Länge (11) zwischen dem Mantelanschlag (11), der sich auf der Seite des Betätigungsendstücks (6) befindet, und diesem eingeführt wird,
c) der Mantelanschlag (11) auf den Einstellkeil (21) geschoben wird, wodurch das Kabel (4, 24) gespannt wird,
d) ein zweiter Mantelanschlag (8, 42), der sich auf der Seite des Schlosses befindet, an der zugeordneten Mantelarretierung (9, 39) beispielsweise durch Ultraschallschweißen befestigt wird.
